# EUROPÄISCHE PATENTANMELDUNG

(11) **EP 2 570 228 A2**
(43) Veröffentlichungstag der Anmeldung: **20.03.2013**
(21) Anmeldenummer: 12184800.6
(22) Anmeldetag: 18.09.2012
(51) Int. Cl.: B23P 13/00, B23P 23/04, B23Q 39/02, B23B 5/18, B23C 3/06, B24B 5/42, B23K 26/00, B23H 3/00, B23D 37/00, B23H 9/00

(54) **Verfahren und Vorrichtung zur Fertigbearbeitung von Werkstücken**

(30) Priorität: 18.09.2011 DE 102011113756
(71) Anmelder: MAG IAS GmbH, 73033 Göppingen (DE)
(72) Erfinder: Dr. Schreiber, Leo, 73529 Schwäbisch Gmünd (DE); Weber, Matthias, 73033 Göppingen (DE)
(74) Vertreter: Alber, Norbert

(57) **Zusammenfassung**

Zur Verkürzung der Prozesskette beim Materialabnehmenden Bearbeiten, insbesondere einer Kurbelwelle (1), nach der Grobbearbeitung, und insbesondere nach dem Härten, wird erfindungsgemäß vor allem die Kombination aus Drehfräsen oder Singlepoint-Drehen als erstem Schritt und nachfolgendem Feinbearbeitungsschritt mittels Finishen, elektrochemischem Ätzen, vorgeschlagen

## Beschreibung

### I. Anwendungsgebiet

Die Erfindung betrifft ein Verfahren zum Bearbeiten von rotationssymmetrischen und gegebenenfalls nicht-rotationssymmetrischen Teilen, insbesondere von Kurbelwellen, in der Serienproduktion, insbesondere der Lagerflächen (sowohl der Hublager als auch der Mittellager) von Kurbelwellen bis zum verwendungsfähigen Zustand, also dem Zustand, in dem ohne weitere Materialabnahme an den Lagerflächen zum Beispiel die Kurbelwelle im Motor eingebaut werden kann.

Dabei sind unter Lagerflächen sowohl die Mantelflächen, also die Lagerbreite, zu verstehen, als auch die so genannten Spiegelflächen, also die an die Lagerbreite angrenzenden Stirnflächen, die beispielsweise der axialen Lagerung dienen.

### II. Technischer Hintergrund

Kurbelwellen, insbesondere die Kurbelwellen für Pkw-Motoren mit hohen Zylinderzahlen, sind als während der Bearbeitung instabile und damit schwer bearbeitbare Werkstücke bekannt. Die Beurteilung der Maßhaltigkeit einer fertigen Kurbelwelle erfolgt primär - neben der axialen Lagerbreite - durch die Beurteilung folgender Parameter:
- Durchmesserabweichung = maximale Abweichung vom vorgegebenen Solldurchmesser des Lagerzapfens,
- Rundheit = makroskopische Abweichung von der kreisrunden Sollkontur des Lagerzapfens, angegeben durch den Abstand des äußeren und inneren Hüllkreises,
- Rundlauf = radiale Maßabweichung bei sich drehendem Werkstück, verursacht durch eine Exzentrizität der drehenden Lagerstelle und/oder eine Formabweichung der Lagerstelle von der idealen Kreisform,
- Rauheit in Form der gemittelten Einzelrautiefe Rz = die mikroskopische Rauheit der Oberfläche der Lagerstelle repräsentierender, rechnerisch ermittelter Wert,
- Traganteil = der tragende Flächenanteil der mikroskopisch betrachteten Oberflächenstruktur, der zu einer anliegenden Gegenfläche in Kontakt steht,
und zusätzlich bei den Hublagerstellen:
- Hubabweichung = maßliche Abweichung des Ist-Hubes (Abstand der Ist-Mitte des Hublagerzapfens von der Ist-Mitte der Mittellager), vom Sollhub und
- Winkelabweichung = in Grad oder als auf den Hub bezogenes Längenmass in Umfangsrichtung angegebene Abweichung der Ist-Winkellage des Hublagerzapfens von seiner Soll-Winkellage relativ zur Mittellagerachse und bezüglich der Winkelstellung zu den übrigen Hub-lagerzapfen.

Dabei wird die Einhaltung der gewünschten Toleranzen bei diesen Parametern sowohl durch die zur Verfügung stehenden Bearbeitungsverfahren als auch die Instabilität des Werkstückes und die Bearbeitungskräfte begrenzt. Auch die Effizienz und Wirtschaftlichkeit des Verfahrens spielt in der Praxis eine große Rolle, vor allem für die Serienfertigung, in der Taktzeit und damit Herstellkosten eine entscheidende Rolle spielen, während bei Bearbeitungen im Einzelversuch oder für Prototypen diesen Beschränkungen nicht unterliegen.

Klassisch wurde der Materialabtrag von den Lagerstellen der urgeformten, also gegossenen oder geschmiedeten, Kurbelwelle, in 3 Material abnehmenden Bearbeitungsschritten nacheinander durchgeführt:

### 1. Schritt: Grob-Bearbeitung:

Spanende Bearbeitung mittels bestimmter Schneide. Dabei wurden die Verfahren Drehen, Drehräumen, Dreh-Drehräumen, Innenrundfräsen und Außenrundfräsen, Orthogonalfräsen, insbesondere als Hochgeschwindigkeitsfräsen, bzw. Kombinationen dieser Verfahren eingesetzt. Das abzutragende Materialaufmass bewegte sich im mehreren Millimeter-Bereich.

### 2. Schritt: Fein-Bearbeitung:

Nass-Schleifen, insbesondere nach vorheriger Härtung des Werkstückes, mittels eines harten, massiven Schleifwerkzeuges, beispielsweise einer Schleifscheibe, welche meist mit ihrer Rotationsachse parallel zur Rotationsachse der zu bearbeitenden Kurbelwelle rotiert; das abzutragende Materialaufmass bewegte sich im mehrere 1/10-Millimeter-Bereich.

Bei hohen Aufmaßen erfolgte die Schleifbearbeitung auch mehrstufig, z. B. zweistufig durch Vor- und Fertigschleifen.

### 3. Schritt: primär Oberflächen-Strukturierung:

Finishen durch in der Regel ein oszillierendes Schleifmittel (Schleifband oder Schleifstein), welches an den Außenumfang der rotierenden Lagerstelle angedrückt wird; das abgetragene Materialaufmass bewegt sich z. Z. im 1/100-Millimeter- oder gar µm-Bereich.

Dabei ist die Bearbeitung noch nach dem Material der Kurbelwelle (Stahl oder Guss) zu unterscheiden, wobei insbesondere Stahlkurbelwellen, die bevorzugt für hoch belastete Einsatzfälle verwendet werden, nach der spanenden Bearbeitung des ersten Schrittes an den Oberflächen der Lagerstellen gehärtet werden. Dies bedingt einen erneuten Verzug der Kurbelwelle, welcher durch das Schleifen und Finishen kompensiert werden musste. Das Härten von Gusskurbelwellen wird z. Z. bereits vielfach weggelassen und kann durch Verwendung eines Gusswerkstoffes größerer Härte, z. B. GGG 60 oder 70 oder mehr und verbesserten Festigkeitswerten, vollständig vermieden werden.

Um die Kosten bei der Kurbelwellenbearbeitung zu senken, wird angestrebt, die Bearbeitung der Lagerstellen von drei auf zwei unterschiedliche Bearbeitungsstufen zu reduzieren.

Das Weglassen des Grob-Bearbeitungs-Schrittes, indem das Ur-formen, in der Regel das Schmieden, so maßgenau durchgeführt wird, dass anschließend nur noch eine Feinbearbeitung benötigt wird, hat in der Praxis zumindest für die Serienfertigung bisher nicht zum Erfolg geführt. Zumindest würde dies jedoch dazu führen, dass insbesondere der durch das Schleifen zu bewältigende Materialabtrag größer als bei der bisher üblichen Schleifbearbeitung sein muss.

Beim Materialabtrag mittels Nass-Schleifen ist jedoch nachteilig, dass
- wegen des zuzugebenden Kühl-Schmiermittels der anfallende Schleifschlamm problematisch in der Entsorgung ist,
- wegen des im Kühlschmiermittel enthaltenen Öles, z. B. beim CBN-Schleifen, immer eine latente Verpuffungsgefahr besteht,
- beim Schleifen die Menge des verwendeten Kühl-Schmiermittels wesentlich größer ist als bei spanenden Bearbeitungsverfahren, da das Kühl-Schmiermittel zusätzlich benutzt wird, um durch Aufstrahlen unter hohem Druck den Schleifstaub wieder aus der Oberfläche der Schleifscheibe zu entfernen, was hohe Energiemengen erfordert,
- dennoch die Gefahr einer Überhitzung des Werkstückes sehr groß ist.

Deshalb wurde in der Vergangenheit versucht, die Feinbearbeitung, bei teilweise gehärteten Werkstücken, also insbesondere die Bearbeitung nach dem Härten, vom Aufwand - also den Investitionskosten als auch den Bearbeitungszeiten und ähnlichem - zu minimieren.

Insbesondere wurde dabei versucht, das Nassschleifen zu eliminieren, und von der spanenden Bearbeitung direkt an beispielsweise das Finishen zu übergeben, wie es etwa die DE 197 146 677 A1 vorschlägt unter Vorgabe bestimmter Übergabebedingungen hinsichtlich der einzelnen Maß-Parameter.

Auch die EP 2 338 625 A1 schlägt eine spezielle Feinbearbeitung mittels bestimmter Schneide vor, die den Schritt des Nassschleifens ersetzen soll, jedoch wird bei Bedarf anschließend ein Finishen vorgesehen, welches nicht nur Form und Oberfläche, sondern auch die Maßhaltigkeit im geringen Rahmen verbessern soll.

Die bisherigen Optimierungsversuche berücksichtigen jedoch nicht ausreichend die Möglichkeiten und insbesondere Kombinationsmöglichkeiten der neueren Bearbeitungsverfahren mit bestimmter als auch mit unbestimmter Schneide sowie ohne Schneide, die inzwischen auch immer in Varianten für die Hartbearbeitung, also die Bearbeitung der gehärteten Werkstückflächen, existieren und damit auch nach den Härten am Werkstück eingesetzt werden können:
- Beim Drehfräsen, also dem Fräsen an einem rotierenden Werkstück, werden vor allem beim Außenfräsen, also einem Fräsen mit einem scheibenförmigen, am Umfang verzahnten, Fräser fein-ausrichtbare (bis auf 1 µm genau) Schneidplättchen verwendet, indem diese auf z.B. Keil-Systemen etwa des Grundkörpers des Fräsers angeordnet sind, die so genau einstellbar sind, dass auch bei 20 bis 50 Zähnen auf einem Fräser eine sehr gute Rundheit und Durchmessergenauigkeit am Werkstück erreicht werden kann.
- Bei einem Orthogonal-Fräser wird inzwischen durch Verwendung von 1 bis 10 Schneiden auf der Stirnfläche eine akzeptable Abtragleistung erreicht, ohne die Oberflächenqualität allzu sehr negativ zu beeinflussen, da die Schneiden nicht nur sehr gut zueinander justiert oder zugeschliffen werden können, sondern da zusätzlich - was auch bei einem Außen-Fräser anwendbar ist - die Schneiden z.B. aus Feinstkorn-Hartmetall mit einer sehr geringen Körnung bestehen. Vor allem aber wird hierdurch gleichzeitig die bisherige Unvereinbarkeit von Härte und Elastizität der Schneide teilweise überwunden.
- Beim Fein-Längsdrehen der Lagerstellen war bisher das Problem, dass für das Ausdrehen des linken und des rechten Eck-Bereiches unterschiedlich geköpfte Drehmeißel benötigt würden, und deshalb im Übergangsbereich dieser beiden Bearbeitungsstellen regelmäßig ein nicht vermeidbarer Absatz von 10 bis 30 µm Höhe vorhanden war, der durch Finishen allein nicht effizient beseitigt werden kann, denn wegen der relativ ungenauen, selbstführenden Lagerung des Finish-Werkzeuges muss für das Beseitigen eines solchen Absatzes ein mehrfach größerer Materialabtrag durchgeführt werden, was einen sehr hohen Zeitaufwand beim Finishen erfordert.

Durch einen in X-Richtung zustellbaren, in Z-Richtung vorschiebbaren und zusätzlich um die B-Achse drehbaren (Singlepointdrehen) Drehmeißel kann eine Lagerstelle jedoch mit einem einzigen Drehmeißel und damit ohne Absatz drehend bearbeitet werden.
- Das Tangential-Drehen mit einer schräg zur Rotationsachse des Werkstückes stehenden und tangential oder bogenförmig entlang bewegten Schneide ist inzwischen wirtschaftlich auch in der Serie anwendbar, nicht nur bei Mittellagern sondern auch bei Pleuellagern. Wenn dabei nicht die Drall-Freiheit der erzeugten Oberfläche im Vordergrund steht, wird bei guter Effizienz eine hohe Maß- und Oberflächenqualität erzielt.
- Beim Trockenschleifen unter Verzicht auf ein flüssiges Kühl- und Schmiermittel kann - selbst wenn eine Kühlung und Reinigung des Werkzeuges mittels Druckluft erfolgt - nach wie vor nur ein äußerst geringer Material-Abtrag, insbesondere von ca. 10 - 30 µm, erreicht werden.
- Beim Finishen wird gelegentlich das mehrstufige, so genannte Maßformfinishen angewandt, bei dem nur im ersten Schritt, bei dem mit grober Körnung gearbeitet wird, ein nennenswerter Materialabtrag bis etwa 30 µm erzielt wird und ggfs. nach Vermessung abgebrochen oder fortgesetzt wird.

Der zweite (Geometrie fertigstellen, messen) und dritte (Oberfläche strukturieren) Schritt des Finishens mit der kleineren Körnung ergibt Materialabträge im Bereich von 15-5 µm, erfolgt zeitgesteuert, und dient zuletzt der Oberflächenstrukturierung.
- Ferner gibt es inzwischen das elektrochemische Ätzen von Oberflächen, welches dem Entgraten und speziellen Profilierungen von Oberflächen, also insbesondere dem Abtragen der Spitzen der mikroskopischen Oberflächenstruktur, dienen soll.

Bekanntermaßen kommt es bei der Strukturierung nicht nur darauf an, die Spitzen zu beseitigen, sondern auch die Täler offen zu halten und als Öl-Reservoir zu belassen. Sofern dies mit den bekannten Verfahren wie dem Finishen nicht ausreichend erzielbar ist, können diese aktiv eingebracht werden, unter anderem durch Beschuss mittels Laser-Strahlen.

Natürlich sind gleichlaufend die Genauigkeitsanforderungen von Kundenseite ebenfalls gewachsen, die heute in der Regel bei 5 µm hinsichtlich der Rundheit, ISO-Qualitätsstufe 6 hinsichtlich der Durchmessergenauigkeit, also z.B. bei einer Pkw-Kurbelwelle etwa 16 µm und hinsichtlich des Rundlaufes zwischen 0,05 und 0,1 mm liegen.

### III. Darstellung der Erfindung

### a) Technische Aufgabe

Es ist daher die Aufgabe gemäß der Erfindung, die Feinbearbeitung der gattungsgemäßen Werkstücke, insbesondere nach dem Härten, bis zur Einsatzfähigkeit zu verringern, insbesondere die Zahl der Arbeitsschritte.

### b) Lösung der Aufgabe

Diese Aufgabe wird durch die kennzeichnenden Merkmale der Ansprüche 1, 2 und 15 gelöst. Vorteilhafte Ausführungsformen ergeben sich aus den Unteransprüchen.

Gegenstand der vorliegenden Erfindung ist das Bearbeiten der gattungsgemäßen Werkstücke und insbesondere deren Lagerstellen nach der spanenden Grobbearbeitung, die Genauigkeiten von 1/10-Millimetern erreicht und dem eventuell nachfolgenden Härten, welches einen zusätzlichen Verzug bedingt.

Die im Folgenden angesprochenen Bearbeitungsschritte betreffen in der Regel ein- und dieselbe Bearbeitungsstelle.

Erfindungsgemäß wird davon ausgegangen, dass nach der Grob-Bearbeitung zunächst ein erster Feinbearbeitungsschritt notwendig ist, der der Erzielung der Maßhaltigkeit dient, und ein zweiter Feinbearbeitungsschritt, der der Erzielung der entsprechenden Oberflächenqualität dient.

Der erste Fein-Bearbeitungsschritt ist eine Zerspanung mittels einer bestimmten Schneide. Hierfür stehen entweder das Drehfräsen - mittels eines Außenfräsers, der während der Bearbeitung parallel zum Werkstück rotiert, oder einem Orthogonalfräser, dessen Rotationsachse senkrecht oder windschief zur Drehachse des Werkstückes rotiert - oder das Drehen, speziell in der Form des Singlepointdrehens, zur Verfügung, die allesamt in der Lage sind, im Extremfall auf Toleranzen bis herab auf ca. 10 µm zu bearbeiten, was bei der erfindungsgemäßen Prozesskette jedoch nicht immer vollständig ausgereizt werden soll.

Für den zweiten Fein-Bearbeitungsschritt stehen Materialabnahmen mittels insbesondere unbestimmter Schneide, wie etwa das Fein-Trockenschleifen oder das Finishen, also insbesondere die Feinstufen des Maßformfinishens, zur Verfügung oder auch das elektrochemische Ätzen mit oder ohne pulsierender Beaufschlagung der Elektroden.

Im Idealfall besteht die Prozesskette nach der Grob-Bearbeitung also aus nur erstem und zweitem Fein-Bearbeitungsschritt.

Nur falls notwendig, wird dazwischen (gemäß Anspruch 2) ein Fein-Zwischenschritt durchgeführt. Hierfür stehen das
- Trockenschleifen zur Verfügung, mit dem nur sehr viel geringere Materialstärken abgenommen werden können als mit dem Nassschleifen, beispielsweise maximal 150 µm, oder
- das Tangentialdrehen, also ein Bearbeitungs-Verfahren mit bestimmter Schneide, oder
- die Grobstufe des Maßformfinishens. Auch
- das Singlepointdrehen ist hier eine Möglichkeit, falls dies nicht bereits bei dem ersten Feinbearbeitungsschritt gewählt wurde.

Von den Kundenanforderungen hängt es dann im Wesentlichen davon ab, ob nach dem zweiten Feinbearbeitungsschritt ein Fein-Abschlussschritt zur Strukturierung der Oberfläche notwendig ist.

Dies könnte vor allem der Einbringung von Kavitäten als Ölreservoire in der Oberfläche für das Werkstück für die Verbesserung der Schmierung und damit Gleiteigenschaften dienen.

Hier kommt vor allem ein gezielter Laserbeschuss zum Erzielen solcher Kavitäten in Frage oder wiederum das elektrochemische Ätzen, falls dieses nicht bereits als Bearbeitungsverfahren beim zweiten Feinbearbeitungsschritt gewählt wurde.

Denn in diesem Fall werden die entsprechenden Erhebungen zum Herauslösen der Kavitäten im Werkstück bereits in der Elektrode für das elektrochemische Ätzen mit eingearbeitet und in einem Arbeitsschritt diese Kavitäten eingebracht und die Spitzen der mikroskopischen Oberflächenstruktur gekappt.

Auf diese Weise wird gegenüber der konventionellen Prozesskette und trotz der erhöhten Anforderungen der Kunden eine Verkürzung der Prozesskette vorgenommen mit den Vorteilen, dass vor allem das Nassschleifen vermieden wird und darüber hinaus - je nach konkreter Kombination - mehrere Bearbeitungsschritte in der gleichen Maschine und Aufspannung durchgeführt werden können.

So können die Bearbeitungsverfahren des ersten und zweiten Feinbearbeitungsschrittes - mit Ausnahme des elektrochemischen Ätzens - gemeinsam in einer Maschine implementiert und damit das Werkstück in einer Aufspannung bearbeitet werden.

Selbst ein zusätzlicher Feinzwischenschritt kann dort untergebracht werden, unabhängig von der konkreten Wahl des Bearbeitungsverfahrens für diesen Feinzwischenschritt.

Selbst eine Lasereinheit zum Beschuss der Werkstückoberfläche kann zusätzlich in einer solchen vom Grundsatz her als Drehmaschine, also für ein während der Bearbeitung antreibbares Werkstück mit der definierter und bekannter (C-Achse) Drehlage ausgelegter Werkzeugmaschine, eingesetzt werden.

Gemäß der vorliegenden Erfindung wird vorzugsweise jedoch vorgeschlagen, den zweiten Feinbearbeitungsschritt unmittelbar auf den ersten Feinbearbeitungsschritt folgen zu lassen und als zweiten Feinbearbeitungsschritt entweder das Finishen oder das elektrochemische Ätzen auszuwählen.

Dabei werden Materialabnahmen beim zweiten Feinbearbeitungsschritt von lediglich maximal 10 µm durchgeführt. Sowohl das Finishen als auch das elektrochemische Ätzen werden zeitgesteuert durchgeführt, also mit einer definierten Einwirkzeit, ohne das erzielte Ergebnis zu messen.

Beim ersten Fein-Bearbeitungsschritt werden jedoch keineswegs die maximal möglichen Genauigkeiten dieser Verfahren angestrebt, sondern es wird beim Drehfräsen bei der Rundheit bis auf eine Genauigkeit von mindestens 10 µm und beim Durchmesser bis auf eine Genauigkeit von maximal 10 µm bearbeitet, beim Singelpointdrehen dagegen bei der Rundheit bis auf eine Genauigkeit von maximal 10 µm und ebenso beim Durchmesser bis auf eine Genauigkeit von maximal 10 µm.

Vorzugsweise wird dies erreicht bei Schnittgeschwindigkeiten von 150 bis 400 m pro Minute.

Falls der Materialabtrag und die geforderte Genauigkeit, die dann im zweiten Feinbearbeitungsschritt noch erzielt werden müssen, dort nicht mehr wirtschaftlich erreichbar sind, wird der angegebene Fein-Zwischenschritt durchgeführt.

Falls im zweiten Fein-Bearbeitungsschritt das elektrochemische Ätzen gewählt wird, wird erfindungsgemäß vorgeschlagen, auf der dafür benutzten Elektrode unmittelbar Erhebungen oder Abdeckungen auf der Wirkfläche anzuordnen, die dann Kavitäten in der Oberfläche des Werkstückes in definierter Verteilung und mit definierter Tiefe herstellen. Diese Erhebungen besitzen dann eine Höhe von maximal 10 µm, besser maximal 6 µm.

Falls jedoch ein Finishen in der zweiten Feinbearbeitungsstufe gewählt wird, können Kavitäten gezielt und in definierter Anzahl, Größe und Verteilung auch mittels Laserbeschuss hergestellt werden, da auch die Lasereinheit sehr gut in ein und derselben Maschine integrierbar ist.

Um die Genauigkeit im ersten Feinbearbeitungsschritt weiter zu verbessern, werden Fräs-Werkzeuge verwendet, bei denen die Schneiden z.B. mittels Keilsystemen einer Feinausrichtung gegenüber dem Werkzeuggrundkörper von genauer als 5 µm unterzogen werden können, um dadurch Bearbeitungs-Genauigkeiten im Bereich von 10 µm und auch noch darunter zu erzielen.

Zusätzlich wird - bei Verwendung eines Orthogonalfräsers - ein Fräser mit 1 bis 10 Schneiden, insbesondere 4 bis 6 Schneiden, an der Stirnfläche verwendet, die aber möglicherweise leicht ungleichmäßig über den Umfang verteilt sind, um keine Eigenfrequenz mit Aufschwingen zu bewirken.

Zusätzlich wird der Orthogonalfräser im Eingriff an der zu bearbeitenden Mantelfläche - meist beginnend am Außenumfang der Stirnfläche des Orthogonalfräsers - in Y-Richtung gegenüber der Drehachse des Werkstückes während des Eingriffes verfahren und zwar um mindestens 20%, besser mindestens 50%, insbesondere aber maximal 60% des Durchmessers des Orthogonalfräsers, sodass dadurch das Problem der im Zentrum des Orthogonalfräsers abnehmenden oder mangels Schneiden erst gar nicht vorhandenen Schneidleistung und Schneidrichtung dadurch gelöst wird, dass durch diesen stetig durchgeführten Achsversatz alle Längenbereiche der Lagerstelle ausreichend genau bearbeitet werden.

Zu diesem Zweck dreht sich das Werkstück während der Durchführung dieses Achsversatzes des Orthogonalfräsers mindestens 2-mal, besser mindestens 10-mal oder noch besser mindestens 20-mal mal.

Die Drehzahl des Orthogonalfräsers sollte dabei mindestens das 80-fache, besser 100-fache oder besser 130-fache der Drehzahl des Werkstückes betragen.

Bei der Bearbeitung von gehärteten Oberflächen bestehen die Schneiden der Zerspanungswerkzeuge mit bestimmter Schneide in der Regel aus CBN oder Hartmetall. Das Hartmetall ist dann jedoch vorzugsweise aus einer Körnung von 0,2 µm bis 0,5 µm hergestellt und dadurch trotz ausreichender Härte relativ elastisch.

Falls im zweiten Feinbearbeitungsschritt das elektrochemische Ätzen gewählt wird, wird damit eine Materialabnahme von maximal 30 µm, besser nur 20 µm, durchgeführt, aber eine Abnahme von mindestens 2 µm, da erst dadurch eine ausreichende Glättung der mikroskopischen Oberflächenstruktur auf einem Traganteil von mindestens 50% erreicht wird, was bei dem zweiten Feinbearbeitungsschritt das generelle Ziel ist.

Eine Weiterbeschleunigung des Herstellprozesses kann dadurch erreicht werden, dass mittels des zweiten Feinbearbeitungsschrittes, insbesondere des elektrochemischen Ätzens, nur derjenige Umfangsbereich des Hublagers, also des Pleuellagers, an der Kurbelwelle bearbeitet wird, der bei der Zündung mit dem Druck des Pleuels beaufschlagt wird, was immer der gleiche Umfangsbereich ist.

Insbesondere wird im zweiten Feinbearbeitungsschritt nur der entsprechende halbe Umfang des Pleuellagers bearbeitet.

Auf diese Art und Weise können beim ersten Feinbearbeitungsschritt sowohl Hublager als auch Pleuellager in der gleichen Aufspannung bearbeitet werden und insbesondere in der gleichen Aufspannung wie die vorangehende Grobbearbeitung, was vor allem dann von Interesse ist, wenn dazwischen das Härten nicht stattfindet oder ein Induktivhärten ebenfalls in der gleichen Maschine und in der gleichen Aufspannung durchgeführt wird.

Vor allem in dem zweiten Feinbearbeitungsschritt - im ersten kann dies natürlich ebenso erfolgen - wird die Kurbelwelle mittels mindestens einer Lünette abgestützt.

Dadurch ergeben sich auf den abgestützten Lagerumfängen Abdrücke der Lünette, die zwar maßlich und hinsichtlich der Oberflächenqualität nicht zwingend relevant sind, aber aus optischen Gründen nachbearbeitet werden sollen, indem in einem letzten Feinbearbeitungsschritt diese Abdrücke entfernt werden, was dadurch möglich wird, dass dabei die Abstützung durch die benachbarte Lünette immer auf der Seite der Fortschrittsrichtung dieses letzten Feinbearbeitungsschrittes liegt.

Beim ersten Feinbearbeitungsschritt werden Flansch und Zapfen vorzugsweise bearbeitet, während die Kurbelwelle mittels eines Backenfutters mit einer Zentrierspitze im Zentrum und demgegenüber rückziehbaren Backen einerseits vom Backenfutter und am anderen Ende von der Zentrierspitze gehalten wird.

Während beim Zapfen in aller Regel kein zweiter Fein-Bearbeitungsschritt durchgeführt wird, wird beim Flansch im zweiten Fein-Bearbeitungsschritt versucht, eine drallfreie Oberfläche zu erzielen.

Zur Durchführung des erfindungsgemäßen Verfahrens benötigt die dafür benutzte Drehmaschine
- ein Maschinenbett,
- einen Spindelstock, insbesondere mit Spannfutter,
- einen Gegen-Spindelstock mit Spannfutter,
- eine gesteuerte C-Achse,
- mindestens eine Lünette,
- eine Fräseinheit mit einem Scheibenfräser oder mit einem Orthogonalfräser, wobei der Orthogonalfräser zusätzlich zur X-Achse eine Y-Achse aufweist,
- ggf. eine Finish-Einheit und/oder eine um die C-Achse rotierenden Schleifscheibe.
   Vorzugsweise umfasst diese Drehmaschine auch
- eine Lasereinheit zum Beschießen der Umfangsflächen des Werkstückes, und/oder
- eine aktivierbare und deaktivierbare Messeinheit.

### c) Ausführungsbeispiele

Ausführungsformen gemäß der Erfindung sind im Folgenden beispielhaft näher beschrieben. Es zeigen:

Es zeigen:
- Fig. 1a, b:: eine übliche Kurbelwelle in Seitenansicht und eine vergrößerte einzelne Lagerstelle,
- Fig. 2a, b:: eine Drehmaschine mit oberhalb als auch unterhalb der Drehachse liegenden Supporten,
- Fig. 3a, b:: eine Drehfräsmaschine mit nur oberhalb der Drehachse liegenden Supporten,
- Fig. 4a, b:: verschiedene Bearbeitungssituationen an einem symbolhaften Werkstück,
- Fig. 5:: Maßabweichungen im Querschnitt einer Lagerstelle und
- Fig. 6:: mikroskopische Oberflächenstrukturen an einer Werkstück-oberfläche.

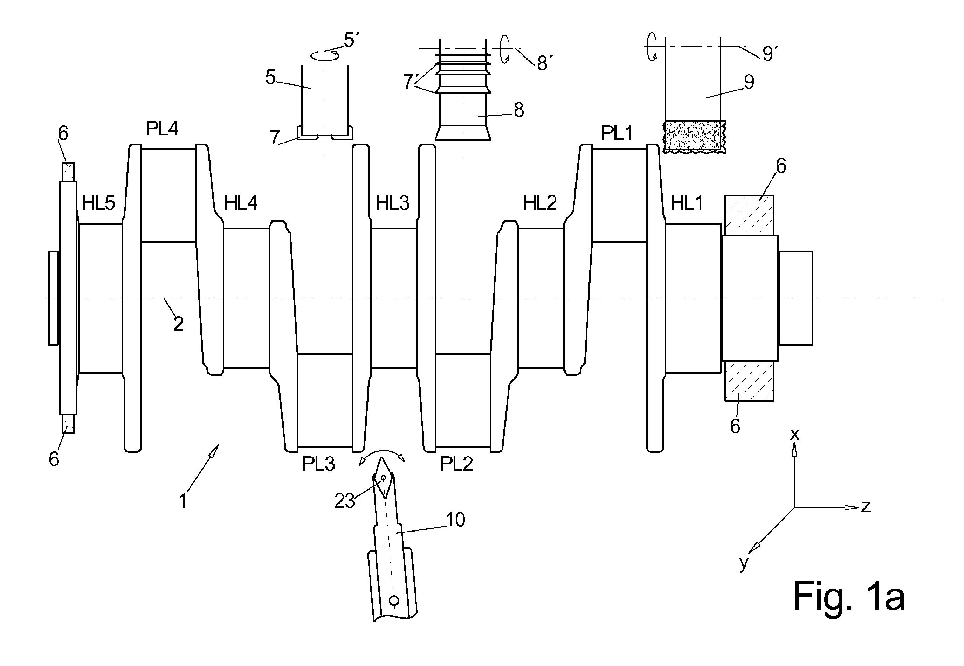

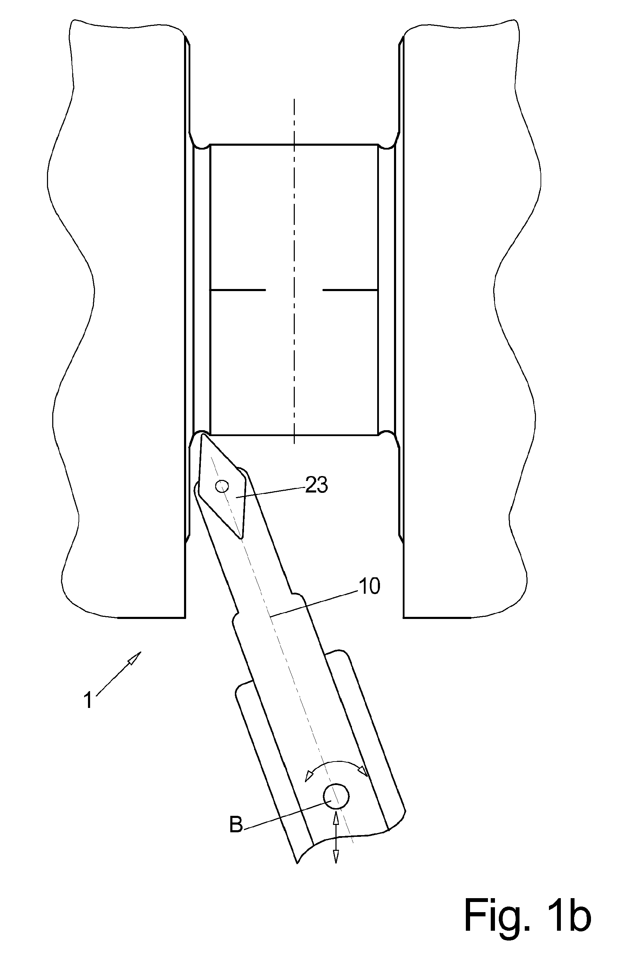

Fig. 1a zeigt in der Seitenansicht eine typische Kurbelwelle 1 für einen Vierzylinder-Verbrennungsmotor, also mit vier exzentrischen Hub- oder Pleuellagern PL1 bis PL4 und daneben angeordneten insgesamt fünf Hauptlagern HL1 bis HL5, die auf der späteren Rotationsachse (der Z-Achse) der Kurbelwelle angeordnet sind, auf der in der Darstellung der Fig. 1 die Kurbelwelle 1 auch als Drehachse 2 in einer nicht näher dargestellten Drehmaschine aufgespannt ist, und zwar durch radiales Spannen mittels Spannbacken 6 an dem Flansch 4 am einen Ende und dem Zapfen 3 am anderen Ende der Kurbelwelle 1.

Erfindungsgemäß geht es vor allem um das Bearbeiten der Mantelflächen der Lagerstellen, also der Hauptlager sowie der Pleuellager, einschließlich der daran angrenzenden Seitenflächen, der so genannten Spiegelflächen.

Oberhalb und unterhalb der Kurbelwelle 1 sind beispielhaft Bearbeitungswerkzeuge dargestellt, oben von links nach rechts:
- zum Einen ein Fingerfräser 5, dessen Rotationsachse 5' lotrecht zur Drehachse 2, die bei Drehmaschinen üblicherweise als Z-Achse im Raumkoordinatensystem definiert wird, steht.
- auf der Stirnfläche des Fingerfräsers sind ein oder mehrere, vorzugsweise 2 bis 8, Schneiden 7 angeordnet, die sich bis auf die Umfangsfläche des Fingerfräsers 5 erstrecken, so dass durch Kontaktieren des rotierenden Fingerfräsers 5 an einer Mantelfläche einer rotierenden Lagerstelle die Lagerstelle spanend bearbeitet werden kann.
- daneben ist ein Scheibenfräser 8 angeordnet, dessen Rotationsachse 8' parallel zur Z-Achse liegt, und auf dessen Umfang eine große Zahl von Schneiden 7' angeordnet sind, die sich entlang der gesamten Breite der Umfangsfläche und radial über den äußeren Randbereich des scheibenförmigen Grundkörpers des Scheibenfräsers 8 erstrecken.
   Wegen der großen Anzahl von meist ca. 80 Schneiden bzw. Schneidplättchen 23, die an einem Scheibenfräser 8 mit beispielsweise 700 mm Durchmesser justiert werden müssen, ist die exakte Justierung in radialer und axialer Richtung übereinstimmend für alle Schneidplättchen hier mit einem großen Zeitaufwand verbunden.
- Rechts daneben ist eine ebenfalls um eine in Z-Richtung liegende Rotationsachse 9' drehende Schleifscheibe 9 dargestellt, die in ihrem Mantelbereich und den angrenzenden Stirnflächenbereichen mit Schleifkörnern, in der Regel Hartmetall, Keramik oder CBN besetzt ist und meist - wie der Scheibenfräser 8 ebenfalls - eine in Z-Richtung gemessene axiale Erstreckung besitzt, die der Breite der jeweiligen Lagerstelle entspricht.

Unterhalb der Kurbelwelle ist ein Drehwerkzeug 10 in der Ausführungsform als Singlepoint-Drehwerkzeug dargestellt, welches nicht exakt in X-Richtung, sondern leicht schräg hierzu in Richtung Lagerstelle ragt und diese Kontaktieren kann, um auch eine der Ecken der Lagerstelle ausdrehen zu können.

Damit mit ein- und demselben Drehwerkzeug 10 beide Ecken einschließlich der dazwischen liegenden Mantelflächen ohne abzusetzen und damit ohne einen Absatz zu erzeugen, gedreht werden können, ist dieses Drehwerkzeug 10 - wie in Fig. 1b vergrößert dargestellt - um die B-Achse schwenkbar zusätzlich zu seiner Verfahrbarkeit in X-Richtung und natürlich ausreichend schlank, um in die Lagerstelle einfahren zu können.

Es versteht sich von selbst, dass bei Bearbeiten eines der Pleuellager PL1 bis PL4 an der um die Hauptlagerachse drehenden Kurbelwelle diese im Eingriff befindlichen Werkzeuge zusätzlich eine Nachführbewegung in X-Richtung durchführen müssen, und beim Fingerfräser 7 sowie beim Schneidwerkzeug 10 hierfür zusätzlich eine Nachführbewegung in Y-Richtung notwendig ist, um dem umlaufenden Pleuellager folgen zu können.

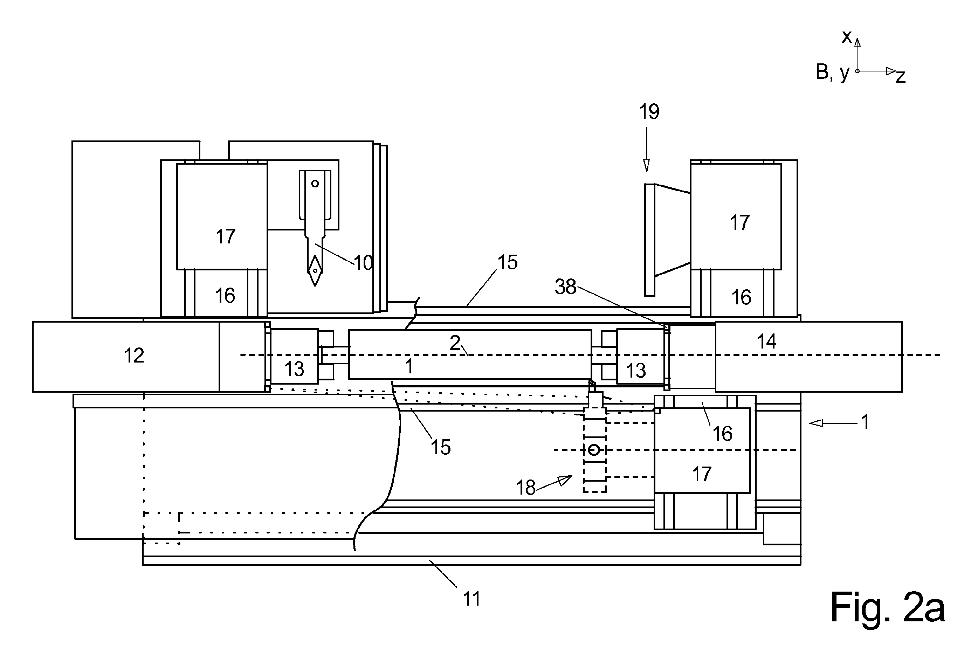

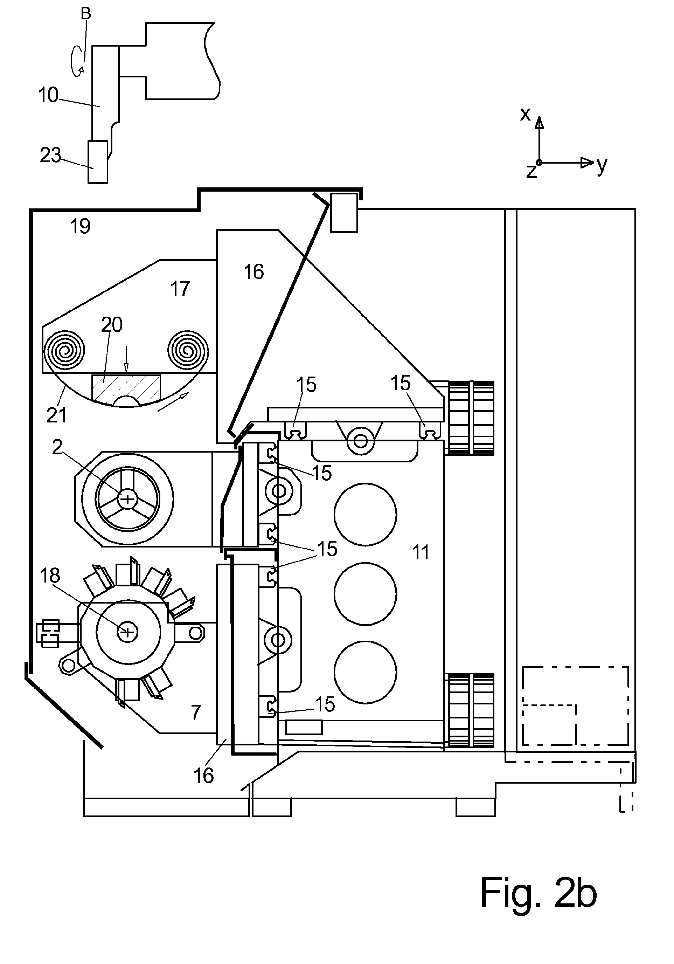

Fig. 2a und b zeigen in Frontansicht und Z-Richtung betrachtet beispielhaft eine Drehmaschine, wie sie zur Bearbeitung solcher Werkstücke wie Kurbelwellen mit den erfindungsgemäßen Verfahren benutzt werden kann:
Wie Fig. 2b zeigt, ist vor der senkrechten Frontfläche des Maschinenbettes 11 in dessen oberem Bereich ein Spindelstock 12 angeordnet, der ein drehend antreibbares Spannfutter 13 mit Spanbacken 6 trägt. Dem Spindelstock 12 gegenüberliegend ist ein Gegen-Spindelstock 14 angeordnet, der ebenfalls ein Spannfutter 13 trägt, so dass ein Werkstück, beispielsweise eine Kurbelwelle 1, mit seinen beiden Enden auf der Drehachse 2, die in Z-Richtung verläuft, in jeweils einem der Spannfutter 13 aufgenommen und drehend angetrieben werden kann.

Auf der Frontseite des Bettes 11 unterhalb der Drehachse sowie auf der ebenen Oberseite des Bettes 11 sind jeweils in Z-Richtung verlaufende, paarweise Längsführungen 15 angeordnet, auf denen Werkzeugeinheiten verfahrbar sind, in diesem Fall eine Werkzeugeinheit auf dem unteren und zwei auf den oberen Längsführungen 15:
Jede Werkzeugeinheit besteht aus einem entlang der Längsführungen 15 verfahrbaren Z-Schlitten 16 und einem darauf laufenden, in X-Richtung verfahrbaren X-Schlitten 17, auf dem das Werkzeug oder die Werkzeugeinheit montiert ist:
   Bei der Einheit unterhalb der Drehachse 2 ist dies ein üblicher Werkzeugrevolver 18 mit darin eingesetztem Drehwerkzeug 10 in der Bauform eines Sternrevolvers und mit einer Schwenkachse, die in Z-Richtung verläuft.
   Bei der linken oberen Einheit handelt es sich um ein einzelnes Drehwerkzeug 10 in Singlepoint-Ausführung, also schwenkbar um die B-Achse, das sich etwa in X-Richtung erstreckt und auch in X-Richtung verfahrbar ist auch in Abstimmung mit der Schwenkbewegung.
   Bei der rechten oberen Einheit handelt es sich um Finish-Werkzeug 19, das eine Umfangsfläche am Werkstück glätten kann.

In Fig. 2b ist dieses Finish-Werkzeug 19 in Z-Richtung betrachtet dargestellt. Dort ist ersichtlich, dass dieses Werkzeug ein Finish-Formteil 20 umfasst mit einer Kavität entsprechend der konvexen Umfangsfläche des Werkstückes, an die es angelegt werden soll, z. B. in Form eines Halbkreises, und ein Finish-Band 21, welches über die Kontaktfläche des Formteiles 20 geführt ist und mit seinen Enden auf je einer Vorratsrolle aufgewickelt ist.

Auch ein Singlepoint-Drehwerkzeug 10 ist in dieser Ansicht daneben in Fig. 2B nochmals vergrößert dargestellt.

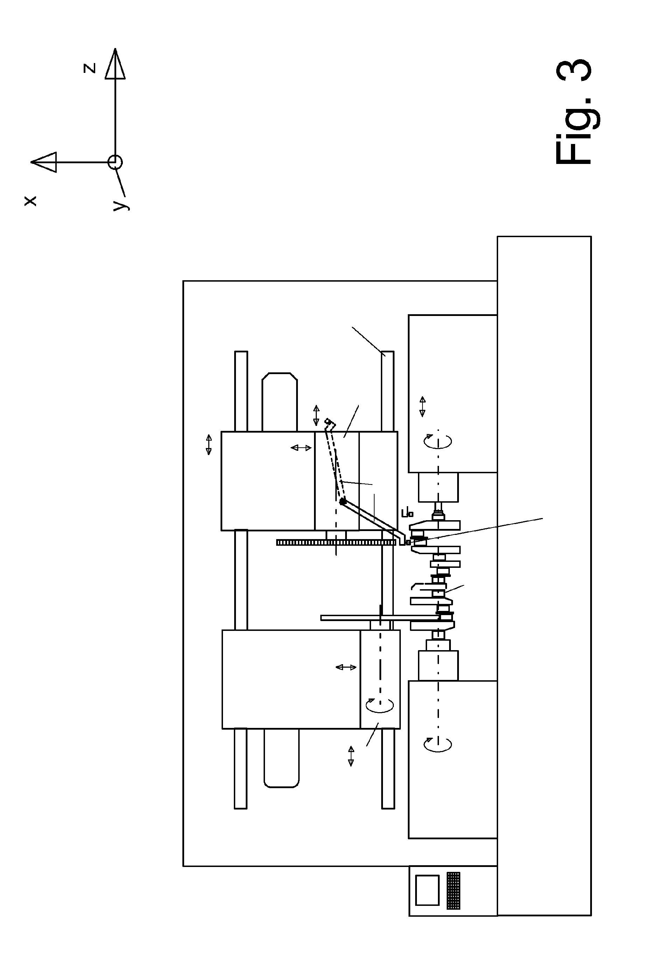

Die Fig. 3 zeigt dagegen eine Drehfräsmaschine, bei der wiederum eine Kurbelwelle 1 als Werkstück zwischen zwei gegeneinander gerichteten Spannfuttern 13 von Spindelstock und Gegen-Spindelstock 14 gehalten und drehend um die Drehachse 2 antreibbar ist, die hier ebenso wie bei der Drehmaschine der Figuren 2 als C-Achse ausgebildet ist.

In diesem Fall befinden sich nur oberhalb der Drehachse 2 am Maschinenbett 11 Längsführungen 15, auf denen zwei Werkzeugeinheiten mit Z-Schlitten 16 und darauf laufendem X-Schlitten 17 vorhanden sind.

In diesem Fall trägt der rechte X-Schlitten 17 jedoch einen Scheibenfräser 8, der parallel zur Drehachse rotiert, wie in Fig. 1 angedeutet, und der linke Z-Schlitten 17 eine Schleifscheibe 9, die ebenfalls um eine Achse parallel zur Z-Achse rotiert.

Zusätzlich ist am rechten X-Schlitten 17 noch eine Messeinheit 22 vorhanden, die durch Verschwenken aktiviert und deaktiviert werden kann, um ohne Ausspannen oder Umspannen des Werkstückes Messungen an einer Umfangsfläche hinsichtlich Durchmesser, Rundheit, Längsposition der Spiegelfläche durchführen zu können, indem ein in X-Richtung anzunähernder Messtaster die Umfangsfläche kontaktiert.

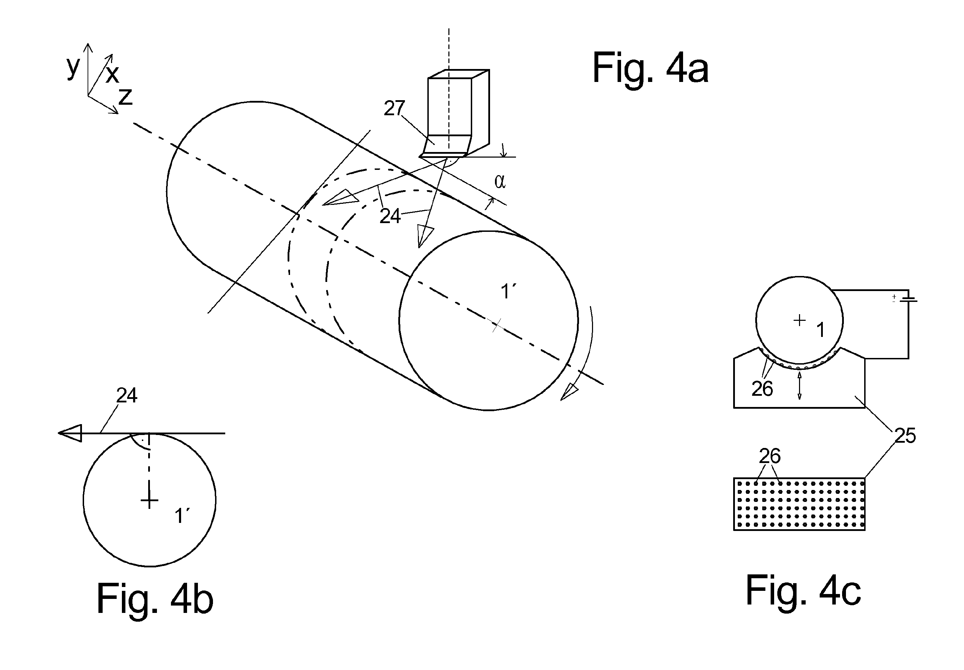

Die Fig. 4a zeigt - nicht am Beispiel einer Kurbelwelle, sondern an einem zylindrischen Werkstück - die Bearbeitung eines Teils der Umfangsfläche, was ebenso gut die Umfangsfläche eines Hublagers oder Pleuellagers sein könnte, mittels Tangentialdrehen:
Dabei wird eine windschief zur Drehachse des rotierenden Werkstückes stehende - gerade oder ballige - Schneide in tangentiale Bewegungsrichtung 24 kontaktierend an der Umfangsfläche des Werkstückes entlang bewegt, bei einer geraden Schneide in einer tangentialen, geraden Richtung und bei einer balligen Schneide in einer tangentialen, bogenförmigen Richtung um eine Schwenkachse, die parallel zur Drehachse 2 verläuft.

Damit können nur sehr geringe Übermaße abgenommen werden, das Bearbeitungsergebnis ist jedoch hochgenau und hat eine sehr gute Oberfläche.

In Fig. 4c ist das elektrochemische Ätzen dargestellt.

Dabei wird eine ECM-Elektrode 25, deren Kontaktfläche vorzugsweise der Kontur des zu bearbeitenden Umfangs des Werkstückes angepasst ist und eine entsprechende Kavität aufweist, gegen das Werkstück angenähert, wobei zwischen dem Werkstück einerseits und der Elektrode 25 andererseits ein elektrischer Strom bzw. eine elektrische Spannung angelegt wird und zusätzlich eine Salzlösung oder Säure zwischen beiden eingebracht wird.

Bei entsprechender Wahl dieser Parameter werden oberflächennahe Bereiche, insbesondere die Spitzen der mikroskopischen Oberflächenstruktur des Werkstückes, dadurch abgeätzt und in der Salzlösung abtransportiert. Zur Verbesserung kann die Elektrode 25 pulsierend radial oder auch axial bewegt werden, um den Abtransport mittels der Salzlösung oder Säure zu optimieren.

Prinzipiell kann dabei das Werkstück um die Drehachse 2 gedreht werden.

Wenn jedoch wie im dargestellten Fall auf der Kontaktfläche der Elektrode 25 eine Vielzahl von mikroskopisch kleinen Erhebungen 26 vorhanden sind, die entsprechende mikroskopische Kavitäten in der Oberfläche des Werkstückes erzeugen sollen, die später als Ölreservat dienen, muss dann natürlich das Werkstück stillstehend bearbeitet werden.

Ansonsten können solche mikroskopisch feinen Kavitäten - in der Regel nur mit einer Tiefe von wenigen µm - auch durch Laserbeschuss hergestellt werden.

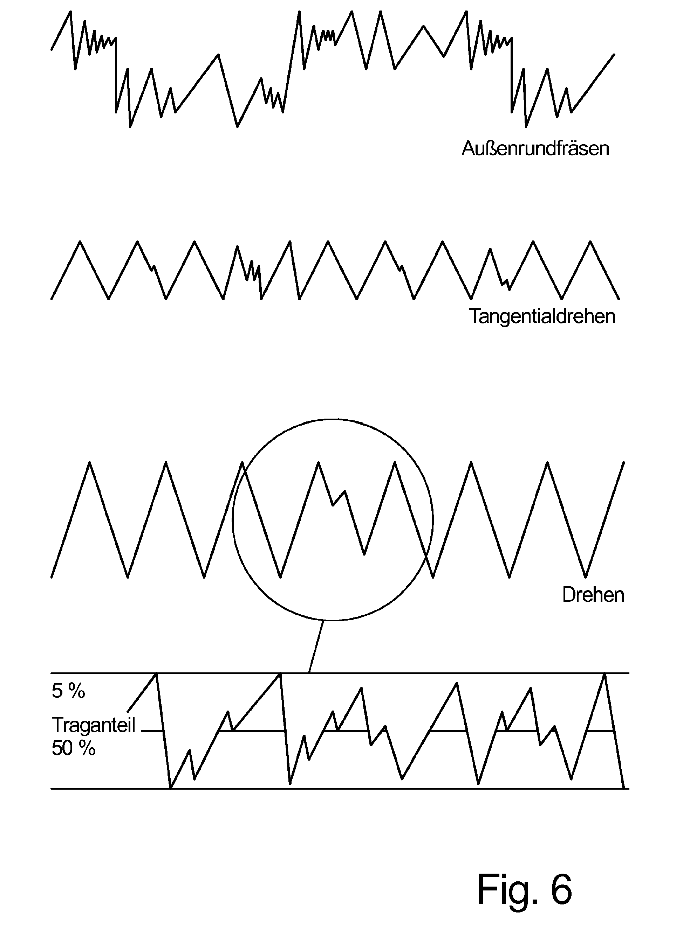

Dabei zeigt Fig. 6 unterschiedliche mikroskopische Oberflächenstrukturen, wie sie durch unterschiedliche spanende Bearbeitungsverfahren mit bestimmter Schneide typisch sind:
Beim Längsdrehen ergibt sich ein typisches, ziemlich regelmäßiges Sägezahn-Profil, dessen Rauhigkeit Rz im Bereich von 3 - 10 µm liegt.

Die Oberflächenstruktur nach dem Tangentialdrehen führt zu einer unregelmäßigeren Struktur als die Periodizität des Längsdrehens, und mit einem viel geringeren Abstand zwischen Spitzen und Tälern mit einem Rz von ca. 1,5 - 5 µm.

Für das Außen-Rundfräsen ist es dagegen typisch, dass die Oberflächenstruktur danach Bereiche aufweist, die mikroskopisch gesehen auf unterschiedlich hohem Niveau liegen können, entsprechend dem Einschlag der einzelnen Fräsmesser nacheinander am Werkstück und den dadurch gebildeten, wenn auch sehr feinen, Facetten am Werkstück.

Im unteren Bereich der Fig. 6 ist vergrößert eine mikroskopische Struktur dargestellt, und der angestrebte 50%-ige Traganteil nach Abtragung der mikroskopischen Spitzen, der für Lagerstellen in etwa angestrebt wird.

Dabei wird auch klar, dass mit zunehmendem Abtrag der Spitzen und zunehmendem Traganteil - besonders beim Finishen - die durch das Werkzeug zu bearbeitende Fläche immer größer und dadurch der Abtrag in radialer Richtung immer langsamer wird.

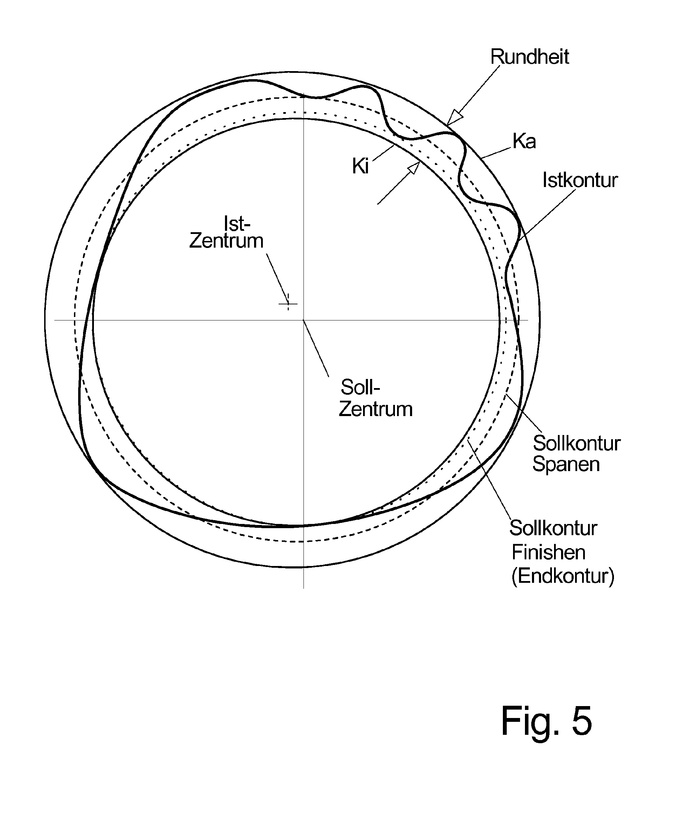

Fig. 5 zeigt - betrachtet in Richtung der Z-Achse - einen Schnitt durch eine Lagerstelle, z. B. einer Kurbelwelle, deren Soll-Kontur eine exakt runde Kontur ist. In der Praxis ist es jedoch eine - übertrieben dargestellt - unrunde Kontur, zumindest wie sie nach der spanenden Bearbeitung mit bestimmter Schneide durch die Einwirkung bestimmter Störgrößen entsteht.

Dabei wird zum Ermitteln der Rundheit ein innerer Ki und äußerer Hüllkreis Ka an die Ist-Kontur angelegt, und der Abstand dieser beiden Hüllkreise gibt die Rundheit an.

Darüber hinaus kann auch das Ist-Zentrum der entsprechenden Lagerstelle nicht exakt mit dem Soll-Zentrum übereinstimmen, was insbesondere bei Hub-Lagerzapfen der Fall ist, und die Rundlauf-Genauigkeit negativ beeinflusst.

Angegeben ist ferner die Soll-Kontur nach dem Finishen, also die Endkontur, die dementsprechend radial innerhalb der Soll-Kontur nach dem Ende des Zerspanens mit bestimmter Schneide liegt.

### BEZUGSZEICHENLISTE

- 1: Kurbelwelle
- 1': Werkstück
- 2: Drehachse
- 3: Zapfen
- 4: Flansch
- 5: Fingerfräser
- 5': Rotationsachse
- 6: Spannbacke
- 7, 7': Schneide
- 8: Scheibenfräser
- 8': Rotationsachse
- 9: Schleifscheibe
- 9': Rotationsachse
- 10: Drehwerkzeug
- 11: Maschinenbett
- 12: Spindelstock
- 13: Spannfutter
- 14: Gegen-Spindelstock
- 15: Längsführung
- 16: Z-Schlitten
- 17: X-Schlitten
- 18: Werkzeug-Revolver
- 19: Finish-Werkzeug
- 20: Finish-Formteil
- 21: Finish-Band
- 22: Messeinheit
- 22a: Messtaster
- 23: Schneidplättchen
- 24: tangentiale Bewegungsrichtung
- 25: ECM-Elektrode
- 26: Erhebung
- 27: Tangential-Drehwerkzeug

## Patentansprüche

1. Verfahren zur verwendungsfähigen Fertigbearbeitung von Werkstücken mit rotationssymmetrischen und gegebenenfalls nicht rotationssymmetrischen, zentrisch und gegebenenfalls auch exzentrisch liegenden, Umfangsflächen und angrenzenden Seitenflächen, insbesondere Kurbelwellen,
wobei nach einer spanenden Grob-Bearbeitung und nachfolgendem eventuellen partiellen Härten, insbesondere der Umfangsflächen, die Fein-Bearbeitung der Umfangsflächen wie folgt abläuft:
- erster Fein-Bearbeitungs-Schritt mittels bestimmter Schneide, insbesondere mittels
- Drehfräsen in Form des Außenfräsens oder des Orthogonalfräsens oder
- Drehen, insbesondere in Form des Singlepointdrehens oder Tangentialdrehens,
- unmittelbar gefolgt von
- zweitem Fein-Bearbeitungs-Schritt mittels
- Finishen, insbesondere Fein-Stufe des Maßformfinishens und/oder
- elektrochemischem Ätzen (ECM), insbesondere mit pulsierender Beaufschlagung der Elektrode (PECM).

2. Verfahren zur verwendungsfähigen Fertigbearbeitung von Werkstücken mit rotationssymmetrischen und gegebenenfalls nicht rotationssymmetrischen, zentrisch und gegebenenfalls auch exzentrisch liegenden, Umfangsflächen und angrenzenden Seitenflächen, insbesondere Kurbelwellen, wobei nach einer spanenden groben Bearbeitung und nachfolgendem eventuellen partiellen Härten, insbesondere der Umfangsflächen, die Fein-Bearbeitung der Umfangsflächen wie folgt abläuft:
- erster Fein-Bearbeitungs-Schritt mittels bestimmter Schneide, insbesondere mittels
- Drehfräsen in Form des Außenfräsens oder des Orthogonalfräsens, oder
- Drehen, insbesondere in Form des Singlepointdrehens,
- gegebenenfalls Fein-Zwischen-Schritt mittels
- Trockenschleifen,
- Tangentialdrehen,
- Grob-Stufe des Maßformfinishens,
- Singlepointdrehen oder
- Drehfräsen mit auf genauer als 5 µm ausgerichteten Fräser-Schneiden,
- zweiter Fein-Bearbeitungsschritt mittels
- Fein-Trockenschleifen,
- Finishen, insbesondere Fein-Stufe des Maßformfinishens oder
- elektrochemischem Ätzen (ECM), insbesondere mit pulsierender Beaufschlagung der Elektrode (PECM),
- gegebenenfalls Fein-Abschluss-Schritt zur Strukturierung der Oberfläche, insbesondere Einbringen von Kavitäten, mittels
- Laser-Beschuss oder
- elektrochemischem Ätzen (ECM).

3. Verfahren nach Anspruch 1 oder 2,
**dadurch gekennzeichnet, dass**
nach dem zweiten Fein-Bearbeitungs-Schritt ein Fein-Abschluss-Schritt mittels Laser-Beschuss erfolgt, falls der zweite Fein-Bearbeitungs-Schritt das Finishen, insbesondere die Fein-Stufe des Maßformfinishens, war.

4. Verfahren nach einem der vorhergehenden Ansprüche,
**dadurch gekennzeichnet, dass**
im ersten Fein-Bearbeitungs-Schritt
- die Hauptlager (HL) mittels Singlepointdrehen und
- die Hublager beziehungsweise Pleuel-Lager (PL) mittels Drehfräsen insbesondere in Form des Umfangsfräsens
bearbeitet werden, und/oder
- beim Drehfräsen insbesondere Schnitt-Geschwindigkeiten von 150 bis 400 m/min benutzt werden und/oder bei der Rundheit mindestens bis auf eine Genauigkeit von 10 µm oder genauer und beim Durchmesser bis auf eine Genauigkeit von maximal 10 µm bearbeitet wird, wenn ein Finishen oder ECM folgt,
- beim Singlepointdrehen insbesondere Schnitt-Geschwindigkeiten von 150 bis 400 m/min benutzt werden und/oder bei der Rundheit bis auf eine Genauigkeit von maximal 10 µm und beim Durchmesser bis auf eine Genauigkeit von maximal 10 µm bearbeitet wird.

5. Verfahren nach einem der vorhergehenden Ansprüche,
**dadurch gekennzeichnet, dass**
falls der zweite Fein-Bearbeitungs-Schritt das elektrochemische Ätzen (ECM) ist, die Elektrode in definierter Verteilung Erhebungen auf ihrer Wirkfläche mit einer Höhe von maximal 10 µm, besser maximal 6 µm, besser maximal 6 µm, aufweist zum Einbringen von Kavitäten in der Werkstück-Oberfläche.

6. Verfahren nach einem der vorhergehenden Ansprüche,
**dadurch gekennzeichnet, dass**
im Fall eines mehrstufigen Finishens ein Laser-Beschluss nach der letzten Stufe des Finishens erfolgt.

7. Verfahren nach einem der vorhergehenden Ansprüche,
**dadurch gekennzeichnet, dass**
- beim Orthogonalfräsen ein Fräser mit 1 bis 10 Schneiden, insbesondere mit 4 bis 6 Schneiden, die möglicherweise ungleichmäßig über den Umfang verteilt sind, verwendet wird, und/oder
- beim Fräsen Werkzeuge mit Schneiden verwendet werden, die mittels Keilsystemen eine Fein-Ausrichtung von genauer als 5 µm gegenüber dem Werkzeug-Grundkörper erlauben.

8. Verfahren nach einem der vorhergehenden Ansprüche,
**dadurch gekennzeichnet, dass**
- beim Orthogonalfräsen der im Eingriff befindliche Fräser in Y-Richtung um mindestens 20%, besser mindestens 50%, insbesondere aber maximal 60% seines Durchmessers verfahren wird, und in dieser Zeit das Werkstück mindestens 2, besser mindestens 10, besser mindestens 20 Umdrehungen vollzieht, und/oder
- beim Orthogonalfräsen die Drehzahl des Orthogonal-Fräsers mindestens das 80-fache, besser mindestens das 100-fache, besser mindestens das 130-fache der Drehzahl des Werkstückes beträgt.

9. Verfahren nach einem der vorhergehenden Ansprüche,
**dadurch gekennzeichnet, dass**
die Schneiden aus Feinstkorn-Hartmetall mit einer Körnung von 0,2 µm bis 0,5 µm bestehen.

10. Verfahren nach einem der vorhergehenden Ansprüche,
**dadurch gekennzeichnet, dass**
- beim elektrochemischen Ätzen (ECM) eine Materialabnahme von maximal 30 µm, besser nur 20 µm, besser nur 10 µm, aber insbesondere mindestens 2 µm erfolgt, und/oder
- beim elektrochemischem Ätzen (ECM) nur derjenige Umfangs-Bereich des Pleuel-Lagers bearbeitet wird, der bei der Zündung mit dem Druck des Pleuels beaufschlagt wird, insbesondere der entsprechende halbe Umfang.

11. Verfahren nach einem der vorhergehenden Ansprüche,
**dadurch gekennzeichnet, dass**
im ersten Fein-Bearbeitungs-Schritt Hublager und Pleuellager in der gleichen Aufspannung bearbeitet werden und insbesondere in der gleichen Aufspannung wie die vorangehende Grob-Bearbeitung, und dabei insbesondere die Kurbelwelle an Flansch und Zapfen mittels Spannfuttern gehalten wird.

12. Verfahren nach einem der vorhergehenden Ansprüche,
**dadurch gekennzeichnet, dass**
im zweiten Fein-Bearbeitungs-Schritt die Kurbelwelle jeweils mittels insbesondere einer Lünette an einem bereits im ersten Schritt fein bearbeiteten, insbesondere unmittelbar neben dem zu bearbeitenden Lager liegenden, Hauptlager abgestützt wird, und insbesondere in einem letzten Fein-Bearbeitungs-Schritt die dabei sich auf den bearbeiteten Lagern ergebenden Lünetten-Abdrücke beseitigt werden, wobei die Abstützung immer auf der Seite der Fortschrittsrichtung bei diesem letzten Schritt liegt.

13. Verfahren nach einem der vorhergehenden Ansprüche,
**dadurch gekennzeichnet, dass**
im ersten Fein-Bearbeitungs-Schritt außer den Mittel- und Hublagern auch Flansch und Zapfen bearbeitet werden, während die Kurbelwelle insbesondere auf einer Seite in einem Backenfutter und auf der anderen Seite mittels einer gegenüber dem Backenfutter ausfahrbaren Zentrierspitze gehalten wird.

14. Verfahren nach einem der vorhergehenden Ansprüche,
**dadurch gekennzeichnet, dass**
der erste Feinbearbeitungsschritt mittels bestimmter Schneide sowie das Finishen und/oder der Laserbeschuss und/oder Trockenschleifen und/oder Tangentialdrehen und/oder Single-Point-Drehen in der gleichen Maschine und in der gleichen Aufspannung des Werkstückes durchgeführt werden.

15. Drehmaschine zur verwendungsfähigen Fertigbearbeitung von Werkstücken mit rotationssymmetrischen und ggf. nicht rotationssymmetrischen, zentrisch und ggf. auch exzentrisch liegenden, Umfangsflächen und angrenzenden Seitenflächen, insbesondere Kurbelwellen, mit
- einem Maschinenbett (11),
- einem Spindelstock (12), insbesondere mit Spannfutter (13),
- einem Gegen-Spindelstock (14) mit Spannfutter (13),
- einer gesteuerten C-Achse,
- mindestens einer Lünette,
- einer Fräseinheit mit einem Scheibenfräser (8) oder mit einem Orthogonalfräser, wobei der Orthogonalfräser zusätzlich zur X-Achse eine Y-Achse aufweist,
- ggf. einer Finish-Einheit und/oder einer um die C-Achse rotierenden Schleifscheibe (9).

16. Drehmaschine nach Anspruch 15,
**dadurch gekennzeichnet, dass**
- die Drehmaschine eine Lasereinheit zum Beschießen der Umfangsflächen des Werkstückes aufweist, und/oder
- einer aktivierbaren und deaktivierbaren Messeinheit (22).
